# EUROPÄISCHE PATENTSCHRIFT

(11) **EP 3 867 307 B1**
(45) Veröffentlichungstag und Bekanntmachung des Hinweises auf die Patenterteilung: **11.05.2022**
(21) Anmeldenummer: 18812107.3
(22) Anmeldetag: 26.11.2018
(51) Int. Cl.: C08K 3/08, C08K 3/36, C08K 3/10, C08K 3/20, C08L 25/04, C08L 27/02

(54) **KOMPOSITPARTIKEL MIT ORGANISCHEN UND ANORGANISCHEN DOMÄNEN**
COMPOSITE PARTICLES WITH ORGANIC AND INORGANIC DOMAINS
PARTICULES COMPOSITES POURVUES DE DOMAINES ORGANIQUES ET INORGANIQUES

(43) Veröffentlichungstag der Anmeldung: 25.08.2021
(73) Patentinhaber: Wacker Chemie AG, 81737 München (DE)
(72) Erfinder: HASHEMZADEH, Abdulmajid, 84489 Burghausen (DE)
(74) Vertreter: Ege, Markus
(86) Internationale Anmeldenummer: PCT/EP2018/082588
(87) Internationale Veröffentlichungsnummer: WO 2020/108734

(56) Entgegenhaltungen:
- WO-A1-2018/033219
- DE-A1-102009 046 664
- DE-A1-102011 004 361

## Beschreibung

Gegenstand der vorliegenden Erfindung sind Kompositpartikel auf Basis von organischen Polymeren und feinteiligen anorganischen Feststoffen, Verfahren zu deren Herstellung sowie deren Verwendung beispielsweise als Additiv, Bindemittel oder Cobindemittel für diverse Anwendungen.

Kompositpartikel enthalten organische Domänen, beispielsweise eine organische Polymermatrix, und anorganische Domänen, beispielsweise feinteilige anorganische Feststoffe, wie Silica. Die organischen Domänen und die anorganischen Domänen sind allgemein über physikalische oder chemische Bindungen miteinander verknüpft.

In gängigen Verfahren zur Herstellung von Kompositpartikeln werden organische Monomere in wässrigen Dispersionen von anorganischen Partikeln einer Emulsionspolymerisation unterworfen, wobei organische Domänen auf der Oberfläche der anorganischen Partikel verankert werden, wie beispielsweise beschrieben in Dong-Ming Qi, J. of Applied Polym. Sci., 2006, Vol. 99, Seiten 3425 bis 3432; Tsutomu Mizutani, J. of Applied Polym. Sci., 2006, Vol. 99, Seiten 659 bis 669; Frank Bauer, Macromol. Mater. Eng., 2006291, Seiten 493 bis 498 oder DE-A 10 2004 010 155, US 3,544,500, US 4,421,660, WO-A 2006/072464 oder WO-A 2010/118961. Bekannt sind auch Kompositpartikel, die durch radikalisch initiierte Copolymerisation ethylenisch ungesättigter, anorganischer Partikel und ethylenisch ungesättigter, organischer Monomere erhalten werden. Hierfür sind in der EP-A 1620271 ethylenisch ungesättigte Siloxane als anorganische Partikel vorgeschlagen worden. Die EP-A 1243619 beschreibt Kompositmaterialien mit Polyacrylsäure als organische Domäne und Natriumsilikat oder kolloidale Kieselsäure als anorganische Domäne, welche durch zweiwertige Metallkationen über ionische Wechselwirkungen verknüpft sind. Solche Kompositmaterialien liegen allerdings in Form von Gelen vor.

Aus der DE-A 102007038333 sind Zusammensetzungen bekannt, die durch Kondensation von Siliciumverbindungen in Gegenwart von Polyvinylalkoholen hergestellt wurden, wobei die dabei entstandenen anorganischen Partikel allerdings nicht auf Polyvinylalkoholen fixiert wurden, sondern neben diesen in der Zusammensetzung als Abmischung vorlagen.

Die Fixierung organischer und anorganischer Domänen zu Kompositpartikeln sowie die Bereitstellung stabiler Kompositpartikel bereiten jedoch Probleme. Denn die anorganischen Partikel und die organischen Monomere beziehungsweise die organischen Polymere haben für gewöhnlich unterschiedliche Polaritäten und neigen dazu, sich voneinander zu separieren beziehungsweise sich jeweils untereinander zu agglomerieren.

Tritt eine derartige Agglomeration vor oder während der Herstellung der Kompositpartikel auf, so werden beispielsweise die agglomerierten anorganischen Partikel im Zuge der Polymerisation der organischen Monomere von der organischen Polymermatrix eingekapselt, so dass keine gleichmäßige Fixierung anorganischer Partikel auf der organischen Polymermatrix stattfindet und somit letztlich keine chemisch einheitlich aus organischen und anorganischen Domänen aufgebauten Kompositpartikel entstehen. Entsprechende Mischungen liegen in Lösungsmitteln nicht als kolloidale Primärteilchen vor. Es kann sogar vorkommen, dass die anorganischen Partikel und die organische Polymermatrix als Abmischung nebeneinander vorliegen.

Aber auch im Falle von Kompositpartikeln, die zunächst einheitlich aus anorganischen und organischen Domänen aufgebaut sind, kann es im Laufe der Zeit zu einer Agglomeration der anorganischen beziehungsweise organischen Domänen kommen, was sich in einer Gelierung oder Stippenbildung und damit einer unzureichenden Lagerstabilität der Kompositpartikel äußert. Insbesondere bei höheren Temperaturen, beispielsweise ab 40°C, tritt Agglomeration auf.

Agglomerierte Kompositpartikel haben nicht mehr die gewünschten anwendungstechnischen Eigenschaften oder sind sogar gänzlich unbrauchbar. Zur Steigerung der Lagerstabilität wässriger Kompositpartikel-Dispersionen wurden Schutzkolloide oder spezielle Additive als Stabilisatoren zugesetzt, wie beispielsweise die in der DE-A 10 2004 010 155 empfohlenen hydroxygruppenhaltigen Alkylamino-Verbindungen.

Zur Lösung der vorgenannten Probleme wurde in der WO-A 2009/ 112370 vorgeschlagen, Kompositpartikel durch Kondensation von Siloxanen oder Polysiloxanen in Gegenwart von funktionelle Gruppen tragenden Polymeren herzustellen. Als funktionelle Gruppen sind Carbonsäure-, Silan-, Sulfonsäure-, Sulfat-, Phosphat-, Phosphonat-, Iso-Cyanat-, Amin-, quaternisierte Amin-, Hydrazin-, Epoxy-, Ether-, Hydroxy- und CO-Gruppen genannt. So erhältliche Kompositpartikeldispersionen weisen allerdings hohe Viskositäten auf, insbesondere im Falle von wässrigen Dispersionen mit hohen Feststoffgehalten, was deren Handhabung erschwert. Besondere Schwierigkeiten bereitet es auch, Kompositpartikeldispersionen mit hohen Feststoffgehalten in stabiler Form bereitzustellen.

In der WO2012/110618 wurde zur Steigerung der Lagerstabilität und zur Verringerung der Viskosität von hochfeststoffhaltigen Kompositpartikeldispersionen empfohlen, zuerst Kompositpartikel auf Basis von organischen Polymeren und feinteiligen anorganischen Feststoffen herzustellen und anschließend auf die so erhaltenen Kompositpartikel ethylenisch ungesättigte Monomere aufzupolymerisieren. Ein solches mehrstufiges Verfahren ist jedoch aufwändig.

Aufgabe der vorliegenden Erfindung war es, Kompositpartikel bereitzustellen, mit denen die oben genannten Nachteile möglichst vermieden werden. Insbesondere sollten also Kompositpartikel zugänglich werden, die auch in Form von wässrigen Dispersionen mit hohen Feststoffgehalten lagerstabil sind, vorzugsweise auch bei erhöhter Temperatur wie 50°C, und eine niedrige Viskosität aufweisen.

Gegenstand der Erfindung sind Kompositpartikel auf Basis von feinteiligen anorganischen Feststoffen und organischen Polymeren, wobei organische Polymere basieren auf
a) einem oder mehreren ethylenisch ungesättigten Monomeren ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen und Olefine, Vinylaromaten und Vinylhalogenide, und
b) einem oder mehreren ethylenisch ungesättigten Carbonsäuren mit 3 bis 11 C-Atomen, dadurch gekennzeichnet, dass organische Polymere eine Polydispersität PD von ≥ 1,6 haben.

Kompositpartikel umfassen generell eine oder mehrere organische Polymerphasen und darin verteilte, feinteilige anorganische Feststoffpartikel, welche vorzugsweise über physikalische Bindungen (beispielsweise über carboxylfunktionelle Monomereinheiten im Polymer) oder über chemische Bindungen, insbesondere kovalente Bindungen, mit den Polymerketten der organischen Polymerphase verknüpft sind. Chemische Bindungen können beispielsweise durch Kondensationsreaktionen zwischen den feinteiligen anorganischen Feststoffen und den organischen Polymeren gebildet werden, insbesondere über siliciumfunktionelle Monomereinheiten im organischen Polymer. Die organischen Polymere und die feinteiligen anorganischen Feststoffe liegen im Allgemeinen nicht oder nicht ausschließlich als bloße Abmischung nebeneinander vor.

Bei den feinteiligen anorganischen Feststoffen handelt es sich vorzugsweise um Metalle oder Metallverbindungen, wie Metalloxide oder Metallsalze, oder um Halbmetalle oder Halbmetallverbindungen, wie Halbmetalloxide oder Halbmetallsalze.

Geeignete Metalle sind beispielsweise Edelmetallkolloide, wie Kolloide von Palladium, Silber, Ruthenium, Platin, Gold oder Rhodium oder deren Legierungen. Metalloxide sind beispielsweise die Oxide von Titan, Zirkonium, Zinn, Aluminium, Barium, Magnesium, Eisen, Chrom, Antimon, Wismut, Zink, Nickel, Cobalt, Kupfer, Yttrium oder Cer oder deren Hydroxyoxide. Beispiele für Metallsalze sind Metallsulfide, Metallsulfate, Carbonate, Metallcarbonate, Phosphate, Silikate, Aluminate oder Borate. Entsprechende Beispiele sind Sulfide von Eisen, Zinn, Quecksilber, Cadmium, Zink, Kupfer, Silber, Nickel, Cobalt, Mangan, Chrom, Titan, Zirkon, Antimon oder Wismut; Sulfate, Carbonate, Phosphate, Aluminate oder Borate von Erd-(alkalimetallen), Zink, Zirkonium, Eisen, Aluminium oder Zinn; Silikate, wie Lithiumorthosilikat, Calcium-/Magnesiumorthosilikat, Aluminiumorthosilikat, Eisen-(ll)-orthosilikat, Eisen-(lll)-orthosilikat, Magnesiumorthosilikat, Zinkorthosilikat, Zirkonium-(lll)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat oder Natriummagnesiumsilikat.

Als bevorzugte Halbmetallverbindung sei Siliciumoxid, insbesondere Siliciumdioxid genannt. Siliciumdioxid kann in amorpher Form und/oder in unterschiedlichen Kristallstrukturen vorliegen. Geeignetes Siliziumdioxid ist auch unter den Handelsnamen Aerosil^{®}, Nalco^{®}, Levasil^{®}, Ludox^{®}, Nyacol^{®}, Bindzil^{®} und Snowtex^{®} bekannt. Siliziumdioxid kann beispielsweise in Form von Wasserglas oder Silica-Solen vorliegen.

Die Siliciumoxide basieren besonders bevorzugt aus Einheiten der allgemeinen Formel

R¹ₓSi(OR²)_{y}O_{(4-x-y)/2} (I),

worin
x 0, 1, 2 oder 3 und y 0, 1 oder 2 ist,
mit der Maßgabe, dass die Summe x+y<3 ist,
R¹ einen SiC-gebundenen einwertigen Kohlenwasserstoffrest mit 1 bis 18 Kohlenstoffatomen,
R² ein Wasserstoffatom oder einen Kohlenwasserstoffrest mit 1 bis 18 Kohlenstoffatom, der durch ein oder mehrere voneinander separate Sauerstoffatom unterbrochen sein kann, oder einen Rest der Formel -COCH₃, -COC₂H₅ oder -CH₂CH₂OH bedeutet, wobei die einzelnen R¹, R² sowie x und y ihre Bedeutung jeweils unabhängig voneinander annehmen.

Beispiele für Kohlenwasserstoffreste R¹ sind Alkylreste, wie der Methyl-, Ethyl-, n-Propyl-, Isopropyl-, n-Butyl-, sec.-Butyl-, Amyl-, Hexyl-, β-Ethylhexyl-, Heptyl-, Octyl-, iso-Octyl- und Octadecylrest; Alkenylreste, wie der Vinyl- und Allylrest und Butenylreste; Alkinylreste; Cycloalkylreste, wie der Cyclobutyl- und Cyclohexylrest und Methylcyclohexylreste; Arylreste, wie der Phenylrest; Alkarylreste, wie Tolylreste; und Aralkylreste, wie der Benzylrest. Besonders bevorzugt sind der Methyl-, Ethyl-, Vinyl- und Phenylrest.

Beispiele für substituierte Kohlenwasserstoffreste R¹ sind halogenierte Kohlenwasserstoffreste, wie Chlormethyl-, 3-Chlorpropyl-, 3-Brompropyl-, 3,3,3-Trifluorpropyl- und 5,5,5,4,4,3, 3-Heptafluorpentylrest, sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Aminoalkylreste, wie der 3-Aminopropyl-, N-(2-Aminoethyl)-3-aminopropyl- und N-(2-Aminoethyl)-3-amino(2-methyl)propylrest; Aminoarylreste, wie der Aminophenylrest; Acyloxyalkylreste, wie der 3-Acryloxypropyl- und 3-Methacryloxypropylrest; Hydroxyalkylreste, wie der Hydroxypropylrest; und Reste der Formel HOCH₂CH(OH)CH₂SCH₂CH₂-, HOCH₂CH₂OCH₂-; oder Glycidylether, insbesondere Propylglycidylaether.

Vorzugsweise ist R² ein Wasserstoffatom oder gleiche oder verschiedene Alkyl- oder Alkoxyalkylenreste mit 1 bis 4 Kohlenstoffatom(en) je Rest. Beispiele für Kohlenwasserstoffreste R² sind Alkylreste, wie der Methyl-, Ethyl-, n-Propyl-, Isopropyl-, n-Butyl-, sec.- Butyl- und tert.- Butylrest; und Alkoxyalkylenreste, wie der Methoxyethylen- und Ethoxyethylenrest. Besonders bevorzugt sind der Methyl- und Ethylrest. Vorzugsweise ist in der Formel I x durchschnittlich 0,1 bis 2,0 und y durchschnittlich 0 bis 0,5.

Bevorzugt sind auch mit Epoxysilan modifizierte Silica-Sole. Zur Herstellung der modifizierten Silica-Sole kann ein Epoxysilan, beispielsweise 3-Glycidoxypropyl-trimethoxysilan, unter Rühren und gegebenenfalls unter Erhitzen zu Silica-Sol gegeben werden. Hierbei können die Silicapartikel beispielsweise mit den Alkoxygruppen des Silans eine Kondensationsreaktion eingehen unter Anbindung des Epoxysilans an Silicapartikel. Die Epoxygruppe kann hydrolisiert werden, beispielsweise zum Diol. Dadurch kann die Stabilität der Kompositpartikel weiter gesteigert werden.

Die Partikelgröße der feinteiligen anorganischen Feststoffe beträgt vorzugsweise von 2 nm bis 500 nm, besonders bevorzugt 5 nm bis 100 nm und am meisten bevorzugt 10 nm bis 70 nm (bestimmt mittels Transelektronenmikroskopie; mit dem Gerät Libra 120 der Firma Zeiss).

Als feinteilige anorganische Feststoffe sind solche besonders geeignet, deren Löslichkeit in Wasser bei 20°C und Atmosphärendruck (1 atm = 1 ,013 bar absolut) ≤ 1 g/l, bevorzugt ≤ 0,1 g/l und insbesondere bevorzugt ≤ 0,01 g/l ist.

Die feinteiligen anorganischen Feststoffe werden vorzugsweise in Form von Dispersionen, insbesondere wässrigen Dispersionen, eingesetzt und haben einen Feststoffgehalt von vorzugsweise 20 bis 70 Gew.-%, und 30 bis 60 am meisten bevorzugt von 35 bis 50 Gew.-%.

Die Herstellung der feinteiligen anorganischen Feststoffe ist dem Fachmann bekannt und erfolgt beispielsweise durch Fällungsreaktionen oder chemische Reaktionen in der Gasphase (vgl. hierzu E. Matijevic, Chem. Mater. 1993, 5, Seiten 412 bis 426; Ullmann's Encyclopedia of Industrial Chemistry, Vol. A 23, Seiten 583 bis 660, Verlag Chemie, Weinheim, 1992; D. F. Evans, H. Wennerström in The Colloidal Domain, Seiten 363 bis 405, Verlag Chemie, Weinheim, 1994 und RJ. Hunter in Foundations of Colloid Science, Vol. I, Seiten 10 bis 17, Clarendon Press, Oxford, 1991).

Bevorzugt basieren die Kompositpartikel zu vorzugsweise 2 bis 45 Gew.-%, besonders bevorzugt 5 bis 40 Gew.-% und am meisten bevorzugt 10 bis 30 Gew.-% auf feinteiligen anorganischen Feststoffen, jeweils bezogen auf das Trockengewicht der Komponenten (wie feinteilige anorganische Feststoffe und organische Polymere) zur Herstellung der Kompositpartikel. Bevorzugt basieren die Kompositpartikel zu den vorgenannten Mengenanteilen auf den feinteiligen anorganischen Feststoffen, bezogen auf das Gesamtgewicht der Kompositpartikel.

Als Monomere a) der organischen Polymere werden bevorzugt Vinylester von Carbonsäuren mit 1 bis 12 C-Atomen, besonders bevorzugt Vinylester von Carbonsäuren mit 1 bis 8 C-Atomen und am meisten bevorzugt Vinylester von Carbonsäuren mit 1 bis 6 C-Atomen eingesetzt. Beispiele für geeignete Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9R oder VeoVa10R (Handelsnamen der Firma Shell). Bevorzugt ist Vinylacetat.

Methacrylsäureester oder Acrylsäureester sind vorzugsweise Ester von unverzweigten oder verzweigten Alkoholen mit 1 bis 12 C-Atomen, besonders bevorzugt 1 bis 8 C-Atomen und am meisten bevorzugt 1 bis 5 C-Atomen. Beispiele für bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat, Ethylacrylat und 2-Ethylhexylacrylat.

Die Olefine, Vinylaromaten und die Vinylhalogenide haben vorzugsweise 1 bis 12 C-Atome und besonders bevorzugt 1 bis 9 C-Atome und am meisten bevorzugt 1 bis 8 C-Atome. Bevorzugte Olefine sind Ethylen und Propylen. Bevorzugte Vinylaromaten sind Styrol und Vinyltoluol. Ein bevorzugtes Vinylhalogenid ist Vinylchlorid.

Die Monomere a) weisen vorzugsweise keine hydrophilen Gruppen auf. Hydrophile Gruppen können nichtionisch sein, wie Polyglykolgruppen, Polyalkoholgruppen wie Polyvinylalkoholgruppen, oder anionisch, wie Sulfat-, Sulfonat-, Phosphat- oder Phosphonatgruppen, oder kationisch, wie Ammonium-Gruppen.

Bevorzugte organische Polymere enthalten ein oder mehrere Einheiten von (Meth)Acrylsäureestern und/oder Vinylaromaten.

Auf Monomeren a) basieren die organischen Polymere zu vorzugsweise 75 bis 99,5 Gew.-%, besonders bevorzugt 80 bis 99 Gew.-% und am meisten bevorzugt 90 bis 98 Gew.-%, bezogen auf das Gesamtgewicht der organischen Polymere.

Die ethylenisch ungesättigten Carbonsäuren b) haben vorzugsweise 3 bis 9 C-Atome, besonders bevorzugt 3 bis 8 C-Atome und am meisten bevorzugt 3 bis 6 C-Atome. Als Monomere b) sind beispielsweise ethylenisch ungesättigte Mono- oder Dicarbonsäuren bevorzugt, wie Acrylsäure, Methacrylsäure, Crotonsäure, Itaconsäure, Fumarsäure oder Maleinsäure, Monoester der Fumar-säure oder Maleinsäure, wie die Monoethyl- und Monoisopropylester. Besonders bevorzugte Monomere b) sind ethylenisch ungesättigte Monocarbonsäuren, wie Methacrylsäure, Acrylsäure oder Crotonsäure.

Auf Monomeren b) basieren die organischen Polymere zu vorzugsweise 0,1 bis 10 Gew.-%, besonders bevorzugt 0,2 bis 5 Gew.-% und am meisten bevorzugt 0,5 bis 3 Gew.-%, bezogen auf das Gesamtgewicht der organischen Polymere.

Zusätzlich können die organischen Polymere gegebenenfalls auf einem oder mehreren ethylenisch ungesättigten Silanen c) basieren. Beispiele für ethylenisch ungesättigte Silane c) sind (Meth)acryloxypropyltri(alkoxy)silane oder (Meth)acryloxypropyldialkoxymethylsilane, Vinyltrialkoxysilane oder Vinylmethyldialkoxysilane, wobei als Alkoxygruppen beispielsweise Methoxy-, Ethoxy-, Propoxy-, Butoxy-, Acetoxy-, und Ethoxypropylenglykolether-Reste enthalten sein können. Bevorzugte ethylenisch ungesättigte Silane sind Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyl-tris-(1-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltrichlorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinylltributoxysilan, Vinyltrihexyloxysilan, Vinylmethoxydihexyloxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Silane. Besonders bevorzugte ethylenisch ungesättigte Silane sind Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan. Die ethylenisch ungesättigten Silane weisen vorzugsweise keine hydrophilen Gruppen auf.

Auf Silanen c) basieren die organischen Polymere zu vorzugsweise 0 bis 3 Gew.-%, mehr bevorzugt 0,01 bis 1 Gew.-% und besonders bevorzugt 0,02 bis 0,5 Gew.-%, bezogen auf das Gesamtgewicht der organischen Polymere. Am meisten bevorzugt enthalten die organischen Polymere keine Silan-Einheit c).

Des Weiteren können die organischen Polymere zusätzlich auf einem oder mehreren Hilfsmonomeren d) basieren, vorzugsweise auf 0 bis 15 Gew.-%, besonders bevorzugt 0,1 bis 10 Gew.-% und am meisten bevorzugt 0,5 bis 5 Gew.-%, bezogen auf das Gesamtgewicht der organischen Polymere. Beispiele für Hilfsmonomere sind ethylenisch ungesättigte Carbonsäureamide und -nitrile, vorzugsweise Acrylamid und Acrylnitril; Diester der Fumarsäure und Maleinsäure, wie die Diethyl- und Diisopropylester; Carbonsäureanhydride, wie Maleinsäureanhydrid; ethylenisch ungesättigte Sulfonsäuren bzw. deren Salze, vorzugsweise Vinylsulfonsäure, 2-Acrylamido-2-methyl-propansulfonsäure; ethylenisch ungesättigte Epoxide, wie Glycidylmethacrylat oder Glycidylacrylat; ethylenisch ungesättigte Hydroxy- oder Keto-Verbindungen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat; oder Vinylether, wie Methyl-, Ethyl- oder iso-Butylvinylether. Die Hilfsmonomere haben vorzugsweise 1 bis 12 C-Atome, besonders bevorzugt 1 bis 8 C-Atome und am meisten bevorzugt 1 bis 6 C-Atome.

Als Hilfsmonomere d) bevorzugt sind Methacrylsäurehydroxyalkylester und Acrylsäurehydroxyalkylester.

Beispiele für geeignete organische Polymere sind (Meth)acrylat-Polymerisate, Styrol-(Meth)acrylat-Polymerisate, Vinylester-Polymerisate, die jeweils eine oder mehrere Monomer-Einheiten b) und gegebenenfalls eine oder mehrere Monomer-Einheiten c) und gegebenenfalls eine oder mehrere Hilfsmonomer-Einheiten d) enthalten.

Bevorzugt werden als organische Polymere Polymerisate von Vinylestern, insbesondere Vinylacetat, mit 0,1 bis 5 Gew.-%, insbesondere 0,3 bis 3 Gew.-% von ethylenisch ungesättigten Carbonsäuren, wie Acrylsäure oder Methacrylsäure, und gegebenenfalls ≤ 0,5 Gew.-%, insbesondere 0,01 bis 0,5 Gew.-% von ethylenisch ungesättigten Silanen, wie Vinyltrimethoxysilan, Vinyltriethoxysilan, Vinylmethyldimethoxysilan oder Vinylmethyldiethoxysilan; wobei die vorgenannten Polymerisate noch 5 bis 45 Gew.-% an Butylacrylat, VeoVa9, VeoVa10 oder Ethylen und gegebenenfalls die oben genannten Hilfsmonomere d), insbesondere Methacrylsäure- und Acrylsäurehydroxyalkylester, in den oben genannten Mengen enthalten können, und wobei sich die Angaben in Gew.-% auf jeweils 100 Gew.-% aufaddieren.

Bevorzugt werden als organische Polymere auch Polymerisate von (Meth)acrylsäureestern, wie Methyl(meth)acrylat und/oder n-Butyl(meth)acrylat, mit 0,1 bis 5 Gew.-%, insbesondere 0,3 bis 3 Gew.-% von ethylenisch ungesättigten Carbonsäuren, wie Acrylsäure oder Methacrylsäure, und gegebenenfalls ≤ 0,5 Gew.-%, insbesondere 0,01 bis 0,5 Gew.-% von ethylenisch ungesättigten Silanen, wie Vinyltrimethoxysilan, Vinyltriethoxysilan, Vinylmethyldimethoxysilan oder Vinylmethyldiethoxysilan; wobei die vorgenannten Polymerisate noch 0 bis 50 Gew.-%, insbesondere 0,1 bis 50 Gew.-% an Styrol und gegebenenfalls die oben genannten Hilfsmonomere d), insbesondere Methacrylsäure- und Acrylsäurehydroxyalkylester, in den oben genannten Mengen enthalten können, und wobei sich die Angaben in Gew.-% auf jeweils 100 Gew.-% aufaddieren.

Die organischen Polymere haben eine Polydispersität PD von vorzugsweise ≥ 2, mehr bevorzugt 2 bis 1000, noch mehr bevorzugt 3 bis 500, besonders bevorzugt 4 bis 200 und am meisten bevorzugt 5 bis 150.

Die organischen Polymere liegen vorzugsweise in bimodaler Form, d.h. als Mischung von Teilchen, deren Teilchengrößenverteilung zwei Maxima aufweist, oder in polymodaler Form vor, d.h. als Mischung von Teilchen, die keine mono- oder bimodale Teilchengrößenverteilung aufweisen. Organische Polymere in monomodaler Form liegen als Mischung von Teilchen mit einheitlicher Teilchengröße vor.

Die organischen Polymere haben gewichtsmittlere Partikeldurchmesser Dw zwischen vorzugsweise 20 nm und 500 nm, besonders bevorzugt 50 nm und 300 nm und am meisten bevorzugt 70 nm und 200 nm.

Die Polydispersität PD steht für das Verhältnis von gewichtsmittlerem Teilchendurchmesser Dw zu zahlenmittlerem Teilchendurchmesser Dn, PD = Dw/Dn. Die Bestimmung der Parameter Dw und Dn beziehungsweise der Teilchengrößenverteilung erfolgt mittels Laserlichtbeugung und Laserlichtstreuung anhand der organischen Polymere oder der Kompositpartikel mit dem Messgerät LS13320 mit dem optischen Modell PVAC.RF780D, einschließend PIDS, der Firma Beckmann-Coulter und unter Beachtung der Vorschrift des Geräteherstellers nach hinreichender Verdünnung der wässrigen Polymerdispersionen mit vollentsalztem Wasser.

Die Monomerauswahl bzw. die Auswahl der Gewichtsanteile der Monomere erfolgt dabei so, dass im Allgemeinen eine Glasübergangstemperatur Tg von -60°C bis + 120°C, vorzugsweise -50°C bis +100°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Bevorzugt basieren die Kompositpartikel zu vorzugsweise 55 bis 98 Gew.-%, besonders bevorzugt 60 bis 95 Gew.-% und am meisten bevorzugt 70 bis 90 Gew.-% auf organischen Polymeren, bezogen auf das Trockengewicht der Komponenten (wie feinteilige anorganische Feststoffe und organische Polymere) zur Herstellung der Kompositpartikel. Bevorzugt basieren die Kompositpartikel zu den vorgenannten Mengenanteilen auf den organischen Polymeren, bezogen auf das Gesamtgewicht der Kompositpartikel.

Die organischen Polymere sind allgemein erhältlich mittels radikalisch initiierter wässriger Emulsionspolymerisation von einem oder mehreren ethylenisch ungesättigten Monomeren a) und einem oder mehreren ethylenisch ungesättigten Monomeren b) in Gegenwart von einem oder mehreren Emulgatoren, wobei ein Teil der insgesamt eingesetzten Menge an Emulgatoren vor dem Start der Polymerisation vorgelegt und der verbleibende Rest an Emulgatoren nach dem Start der Polymerisation zudosiert wird.

Die erfindungsgemäße Emulsionspolymerisation führt generell zu bimodalen oder polymodalen organischen Polymeren und zu organischen Polymeren mit der oben genannten Polydispersität PD.

Die Gesamtmenge an Emulgator beträgt vorzugsweise 0,1 bis 5 Gew.-%, besonders bevorzugt 0,5 bis 3 Gew.-% und am meisten bevorzugt 1 bis 2 Gew.-%, bezogen auf das Gesamtgewicht der Monomeren.

Vor dem Start der Emulsionspolymerisation werden vorzugsweise 0,001 bis 0,5 Gew.-%, besonders bevorzugt 0,01 bis 0,4 Gew.-% und am meisten bevorzugt 0,01 bis 0,3 Gew.-% Emulgator vorgelegt, bezogen auf das Gesamtgewicht des Wassers in der Vorlage.

Vor dem Start der Emulsionspolymerisation werden vorzugsweise 0,001 bis 5 Gew.-%, besonders bevorzugt 0,01 bis 1 Gew.-% und am meisten bevorzugt 0,08 bis 0,5 Gew.-% Emulgator vorgelegt, bezogen auf das Gesamtgewicht der insgesamt in der Emulsionspolymerisation eingesetzten Emulgatoren.

Geeignete Emulgatoren sind generell anionische oder nichtionische Emulgatoren oder deren Gemische, beispielweise:
1) Alkylsulfate, besonders solche mit einer Alkyl-Kettenlänge von 8 bis 18 C-Atomen, Alkyl- und Alkylarylethersulfate mit 8 bis 18 C-Atomen im hydrophoben Rest und 1 bis 50 Ethylenoxideinheiten.
2) Sulfonate, besonders Alkylsulfonate mit 8 bis 18 C-Atomen, Alkylarylsulfonate mit 8 bis 18 C-Atomen, Ester oder Halbester der Sulfobernsteinsäure mit einwertigen Alkoholen oder Alkylphenolen mit 4 bis 15 C-Atomen im Alkylrest; gegebenenfalls können diese Alkohole oder Alkylphenole auch mit 1 bis 40 Ethylenoxideinheiten ethoxyliert sein.
3) Phosphorsäureteilester oder deren Alkali- oder Ammoniumsalze, besonders Alkyl- und Alkylarylphosphate mit 8 bis 20 C-Atomen im organischen Rest, Alkylether- und Alkylaryletherphosphate mit 8 bis 20 C-Atomen im Alkyl bzw. Alkylarylrest und 1 bis 50 EO-Einheiten.
4) Alkylpolyglykolether bevorzugt mit 8 bis 40 EO-Einheiten und Alkylresten mit 8 bis 20 C-Atomen.
5) Alkylarylpolyglykolether bevorzugt mit 8 bis 40 EO-Einheiten und 8 bis 20 C-Atomen in den Alkyl-und Arylresten.
6) Ethylenoxid/Propylenoxid (EO/PO)-Blockcopolymere bevorzugt mit 8 bis 40 EO- bzw. PO-Einheiten.

EO-Einheit steht für Ethylenoxideinheit und PO-Einheit für Propylenoxideinheit. Bei den genannten Emulgatoren 1) ~3) handelt es sich allgemein um anionische Emulgatoren, bei den Emulgatoren 4)~6) um nichtionische Emulgatoren.

Bevorzugt werden Gemische aus einem oder mehreren anionischen Emulgatoren und einem oder mehreren nichtionischen Emulgatoren. Besonders bevorzugt werden Gemische aus einem oder mehreren Estern oder Halbestern der Sulfobernsteinsäure mit einwertigen Alkoholen oder Alkylphenolen mit 4 bis 15 C-Atomen im Alkylrest als anionische Emulgatoren und ein oder mehrere Alkylpolyglykolether bevorzugt mit 8 bis 40 EO-Einheiten und Alkylresten mit 8 bis 20 C-Atomen als nichtionische Emulgatoren eingesetzt, insbesondere in einem Gewichtsverhältnis von 8 : 1 bis 1 : 8.

Die Emulsionspolymerisation kann auch in Gegenwart von einem oder mehreren Schutzkolloiden durchgeführt werden. Falls Schutzkolloide eingesetzt werden, erfolgt dies vorzugsweise in einer Menge von 0,01 bis 1,0 Gew.-%, bezogen auf das Gesamtgewicht der Monomere. Vorzugsweise erfolgt die Emulsionspolymerisation in Abwesenheit von Schutzkolloiden. Beispiele für Schutzkolloide sind teilverseifte oder vollverseifte Polyvinylalkohole; Polyvinylacetale; Polyvinylpyrrolidone; Polysaccharide in wasserlöslicher Form, wie Stärken (Amylose und Amylopectin), Cellulosen und deren Carboxymethyl-, Methyl-, Hydroxyethyl-, Hydroxypropyl-Derivate, Dextrine und Cyclodextrine; Proteine, wie Kasein oder Kaseinat, Sojaprotein, Gelatine; Ligninsulfonate; synthetische Polymere, wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Die Schutzkolloide können vor dem Start der Emulsionspolymerisation vorgelegt werden oder zudosiert werden.

Die Monomere werden vorzugsweise teilweise vorgelegt und der verbleibende Rest der Monomere wird nach der Initiierung der Emulsionspolymerisation zudosiert. Die Monomere werden in einem Anteil von vorzugsweise 1 bis 20 Gew.-%, besonders bevorzugt 2 bis 15 Gew.-% und am meisten bevorzugt 3 bis 10 Gew.-% vorgelegt, jeweils bezogen auf das Gesamtgewicht der Monomere, und der Rest nach der Initiierung der Emulsionspolymerisation zudosiert. Der Anteil an Monomeren b), c) und d) in der Vorlage beträgt vorzugsweise nicht mehr als 5 Gew.-%, bezogen auf das Gesamtgewicht der vorgelegten Monomere.

Die Dosierungen von Emulgator und Monomeren können separat oder als Gemisch erfolgen. Bevorzugt erfolgt die Dosierung von Emulgator und Monomer nach dem Start der Emulsionspolymerisation getrennt voneinander. Vorzugsweise wird mit der Dosierung 15 Minuten bis 35 Minuten nach dem Start der Emulsionspolymerisation begonnen.

Das Ansatzwasser wird im Allgemeinen teilweise vorgelegt und der Rest zudosiert, wobei die Zudosierung beispielsweise im Rahmen der Initiatordosierung und der Emulgatordosierung erfolgen kann.

Die Polymerisationstemperatur beträgt im Allgemeinen 40°C bis 100°C, vorzugsweise 60°C bis 90°C. Bei der Copolymerisation von gasförmigen Comonomeren, wie Ethylen, 1,3-Butadien oder Vinylchlorid, kann auch unter Druck, im Allgemeinen zwischen 5 bar und 100 bar, gearbeitet werden.

Die Initiierung der Emulsionspolymerisation kann mit den für die Emulsionspolymerisation gebräuchlichen Initiatoren oder Redox-Initiator-Kombinationen erfolgen. Geeignete organische Initiatoren sind beispielsweise Hydroperoxide wie tert.-Butylhydroperoxid, tert.-Butylperoxopivalat, Cumolhydroperoxid, Isopropylbenzolmonohydroperoxid oder Azoverbindungen wie Azobisisobutyronitril. Geeignete anorganische Initiatoren sind die Natrium-, Kalium- und Ammoniumsalze der Peroxodischwefelsäure. Die genannten Initiatoren werden im Allgemeinen in einer Menge von 0,05 bis 3 Gew.-%, bezogen auf das Gesamtgewicht der Monomere, eingesetzt.

Als Redox-Initiatoren werden vorzugsweise Kombinationen aus den genannten Initiatoren in Kombination mit Reduktionsmitteln eingesetzt. Geeignete Reduktionsmittel sind beispielsweise die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt vorzugsweise 0,01 bis 5,0 Gew.-%, bezogen auf das Gesamtgewicht der Monomere.

Zur Initiierung der Emulsionspolymerisation kann der Initiator teilweise vorgelegt und teilweise dosiert werden, oder insgesamt dosiert werden. Bevorzugt wird die Emulsionspolymerisation durch Erhitzen des Ansatzes auf Polymerisationstemperatur und Zudosierung des Initiators, vorzugsweise in wässriger Lösung, gestartet.

Zur Steuerung des Molekulargewichts können während der Emulsionspolymerisation regelnde Substanzen eingesetzt werden. Sie werden üblicherweise in Mengen zwischen 0,01 bis 5,0 Gew.-%, bezogen auf die zu polymerisierenden Monomeren, eingesetzt. Regelnde Substanzen können separat oder auch vorgemischt mit Reaktionskomponenten dosiert werden. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Nach Abschluss der Emulsionspolymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die so erhältlichen organischen Polymere liegen generell in Form von wässrigen Dispersionen vor und haben einen Feststoffgehalt von vorzugsweise über 60 Gew.-%, insbesondere von 65 bis 75 Gew.-%.

Ein weiterer Gegenstand der Erfindung sind Verfahren zur Herstellung von Kompositpartikeln, indem
ein oder mehrere feinteilige anorganische Feststoffe und ein oder mehrere organische Polymere
in einem Lösungsmittel oder einem Gemisch von mehreren Lösungsmitteln gemischt werden,
wobei feinteilige anorganische Feststoffe an organische Polymere fixiert werden und somit Kompositpartikel gebildet werden, und
wobei die organischen Polymere basieren auf
   a) einem oder mehreren ethylenisch ungesättigten Monomeren ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen und Olefine, Vinylaromaten und Vinylhalogenide, und
   b) einem oder mehreren ethylenisch ungesättigten Carbonsäuren mit 3 bis 11 C-Atomen, dadurch gekennzeichnet, dass
   organische Polymere in bimodaler oder in polymodaler Form vorliegen.

Als Lösungsmittel für das erfindungsgemäße Verfahren können Wasser oder ein organisches Lösungsmittel, gegebenenfalls in Kombination mit Wasser, oder ein Lösungsmittelgemisch aus mehreren organischen Lösungsmitteln, gegebenenfalls in Kombination mit Wasser, eingesetzt werden. Ein Einsatz von Wasser als Lösungsmittel oder als Komponente des Lösungsmittelgemisches ist nicht zwingend erforderlich, da das in den kommerziell erhältlichen Ausgangsmaterialien enthaltene Restwasser zur Ausführung des erfindungsgemäßen Verfahrens ausreichend ist.

Geeignete organische Lösungsmittel sind beispielsweise Alkohole mit 1 bis 6-C-Atomen, wie Methanol, Ethanol, n-Propanol oder i-Propanol, Ketone, wie Aceton oder Methylethylketon, Ester, wie Methylacetat, Ethylacetat, Propylacetat oder Butylacetat. Bevorzugte Lösungsmittel sind Wasser oder i-Propanol. Bevorzugte Lösungsmittelgemische enthalten Wasser und i-Propanol.

Die feinteiligen anorganischen Feststoffe und/oder die organischen Polymere können in reiner Form oder in einem Lösungsmittel eingesetzt werden. Die feinteiligen anorganischen Feststoffe werden vorzugsweise in einem oder mehreren Lösungsmitteln, insbesondere in Wasser und gegebenenfalls einem zusätzlichen Lösungsmittel eingesetzt.

Die feinteiligen anorganischen Feststoffe und/oder die organischen Polymere können in einem Lösungsmittel komplett vorgelegt werden. Alternativ kann ein Teil der feinteiligen anorganischen Feststoffe und/oder der organischen Polymere vorgelegt werden, und der verbleibende Rest der feinteiligen anorganischen Feststoffe und/oder der organischen Polymere kann zugegeben werden. Vorzugsweise werden die organischen Polymere in einem Lösungsmittel oder einem Lösungsmittelgemisch vorgelegt und die feinteiligen anorganischen Feststoffe werden in reiner Form ganz oder teilweise während der Kondensation zugegeben.

Die Temperatur beträgt vorzugsweise 1 bis 100°C, besonders bevorzugt 10 bis 80°C und am meisten bevorzugt 20 bis 70°C. Die Durchführung des Verfahrens erfolgt vorzugsweise während 1 bis 24 Stunden, besonders bevorzugt während 2 bis 12 Stunden.

Das Verfahren wird bei pH-Werten von vorzugsweise 1 bis 14, besonders bevorzugt von 7 bis 12 und am meisten bevorzugt von 8 bis 10 ausgeführt.

Die so erhältlichen Kompositpartikel liegen generell in Form einer wässrigen Dispersion vor.

Zur Herstellung der Kompositpartikel in Form von Pulvern werden die Dispersionen der Kompositpartikel getrocknet, gegebenenfalls unter Zusatz von Schutzkolloiden als Trocknungshilfe. Geeignete Trocknungsverfahren sind beispielsweise die Wirbelschichttrocknung, die Walzentrocknung, die Gefriertrocknung oder die Sprühtrocknung. Geeignete Trocknungshilfsmittel sind beispielsweise die oben genannten Schutzkolloide. Vorzugsweise werden Polyvinylalkohole als Trocknungshilfsmittel eingesetzt. Vorzugsweise werden die wässrigen Mischungen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt zwischen 60°C bis 90°C gewählt.

Bei der Trocknung hat sich vielfach ein Gehalt von bis zu 1.5 Gew.-% Antischaummittel, bezogen auf die polymeren Bestandteile, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäuren wie beispielsweise hochdisperse Kieselsäuren, Kaoline, Metakaolin, calciniertes Kaolin, Silicate mit Teilchengrößen vorzugsweise im Bereich von 10 nm bis 100 µm.

Die Viskosität der zu trocknenden Dispersion wird über den Feststoffgehalt so eingestellt, dass ein Wert von < 1500 mPas (Brookfield-Viskosität bei 20 Umdrehungen und 23°C), bevorzugt < 500 mPas, erhalten wird.

Zur Verbesserung der anwendungstechnischen Eigenschaften können den Kompositpartikeln weitere Zusätze zugegeben werden, wie beispielsweise Bindemittel, Pigmente, Füllstoffe, insbesondere Zeolithe, Schaumstabilisatoren, Hydrophobierungsmittel oder Luftporenbildner. Vorzugsweise werden diese Zusätze während oder nach der Trocknung der Dispersion zugegeben.

Die so erhaltenen Kompositpartikel in Form von Pulvern können durch anschließendes Mahlen und/oder Redispergieren in Wasser, organischen Lösungsmitteln oder Reaktivverdünner in die gewünschte Form gebracht werden. Als Reaktivverdünner sind beispielsweise die oben genannten Monomere geeignet. Bevorzugte Reaktivverdünner sind ethylenisch ungesättigte Aromaten, wie Styrol, (Meth)acrylate, wie Ethylenglykoldimethylacrylat, oder Epoxide.

Die Kompositpartikel liegen vorzugsweise in Form einer Dispersion vor und haben vorzugsweise einen Feststoffgehalt von 45 bis 70 Gew.-%, besonders bevorzugt von 50 bis 68 Gew.-%, und am meisten bevorzugt von 55 bis 65 Gew.-%.

Die Kompositpartikel haben eine Viskosität vorzugsweise von ≤ 3000 mPas, besonders bevorzugt ≤ 2000 mPas und am meisten bevorzugt ≤ 1000 mPas (Brookfield-Viskosität bei 25°C als 25%ige Lösung in Wasser).

Die Kompositpartikel in Form einer wässrigen Dispersion mit einem Festgehalt von 10 Gew.-% weisen eine Trübung von vorzugsweise ≤ 700 EBC, besonders bevorzugt ≤ 600 EBC, ganz besonders bevorzugt ≤ 400 EBC und am meisten bevorzugt ≤ 200 EBC auf (Bestimmung gemäß Formazinstandard nach DIN 38404 bei Raumtemperatur mit dem Trübungsmessgerät der Firma Metrisa GmbH: TA6FS/Model 251). Eine Trübung indiziert, dass feinteilige anorganische Feststoffe nicht homogen verteilt sind in den Kompositpartikeln. Transparente Filme sind in der Anwendung der Kompositpartikel erwünscht.

Die Kompositpartikel haben eine Glasübergangstemperatur Tg von vorzugsweise -60°C bis +120°C und besonders bevorzugt von -50 bis +100°C.

Die anorganischen Domänen der Kompositpartikel haben mittlere Teilchengrößen von vorzugsweise 2 nm bis 800 nm, besonders bevorzugt von 4 nm bis 300 nm und am meisten bevorzugt von 10 nm bis 100 nm (bestimmt mit dem Transelektronenmikroskop Libra 120 der Firma Zeiss).

Die Kompositpartikel enthalten vorzugsweise keine zweiwertigen oder dreiwertigen Metallkationen, beispielsweise von Aluminium.

Die Kompositpartikel eignen sich als Bindemittel, Cobindemittel oder Additive zur Verbesserung der anwendungstechnischen Eigenschaften mannigfacher Produkte. Durch Einsatz der Kompositpartikel in Beschichtungsmitteln oder Klebstoffen können beispielsweise deren Thermostabilität oder Kratzfestigkeit gesteigert werden. Kompositpartikel enthaltende Klebstoffe zeigen zudem häufig ein verbessertes Fließverhalten sowie ein stabiles E-Modul bei erhöhter Temperatur und ergeben nach Applikation beispielsweise abziehbare Klebstofffilme. Mit Kompositpartikel enthaltenden Beschichtungsmitteln können Beschichtungen mit Mattierungseffekt ausgestattet werden. Ebenso ist der Einsatz der Kompositpartikel in Formulierungen für Pulverlacke, Kunststoff- und Kompositmaterialien, beispielsweise zur Herstellung von Kunststoff-, Kompositbauteilen oder Verpackungsmaterialien, vorteilhaft. Die Kompositpartikel eignen sich auch zur Oberflächenbehandlung für synthetische oder natürliche Materialien, wie Fasern oder Partikel, wie vorzugsweise Gesteine, Holz, Leder, Papier, Textilien, Kunststoffen, wie Kunststofffolien. Dabei wirken die Kompositpartikel beispielsweise als Imprägnierungsmittel, Versiegelungsmittel oder als Primer zur Haftungsverstärkung, als Barriereschicht, Korrosionsschutz oder schmutzabweisend. Der schmutzabweisende Effekt kann insbesondere bei entsprechenden Anwendungen in Teppichen oder Auslegware in vorteilhafter Weise ausgenutzt werden. Mit den Kompositpartikeln können auch schwer brennbare Beschichtungen für Holz, Kunststoffe, Leder und Papier hergestellt werden. Gesteine können verfestigt oder saniert werden. In Produkten der Verpackungsindustrie kann durch Zusatz der Kompositpartikel eine Gasbarriere erzeugt werden.

Generell eignen sich die Kompositpartikel als Additiv für Beschichtungsmittel oder als Bindemittel für Klebstoffe. Bei den Beschichtungsmitteln kann es sich beispielsweise um Farben oder Klarlacke handeln. Die Beschichtungsmittel eignen sich auch zur Beschichtung von Fasern, wie synthetische oder natürliche Fasern, oder von gewebten oder nicht-gewebten Textilien oder Papier.

Überraschenderweise sind auch wässrige Dispersionen der erfindungsgemäßen Kompositpartikel lagerstabil und niederviskos und somit leicht zu handhaben - und dies sogar, wenn hochfeststoffhaltige wässrige Dispersionen vorliegen. So neigen entsprechende Dispersionen nicht zur Gelierung und sind scherstabil. Die Kompositpartikel verfilmen in hervorragender Weise, und dies trotz ihres Anteils an anorganischen Bestandteilen, die an sich überhaupt nicht verfilmen. Zudem zeigen die verfilmten Kompositpartikel hervorragende mechanische Eigenschaften sowie Festigkeiten und sind wasserbeständig. Dieses Eigenschaftsprofil macht die erfindungsgemäßen Kompositpartikel beispielsweise als Bindemittel oder Cobindemittel für rissüberbrückende Farben besonders interessant.

Des Weiteren sind die Kompositpartikel thermostabil, UV-beständig, steigern die Farbstärke von Farben und haften auf unterschiedlichen Untergründen, sind aber dennoch nicht klebrig. Der Einsatz der erfindungsgemäßen Kompositpartikeln in Beschichtungsmitteln führt zu Beschichtungen, die weniger zur Rissbildung neigen.

Die folgenden Beispiele dienen der detaillierten Erläuterung der Erfindung und sind in keiner Weise als Einschränkung zu verstehen.

### Herstellung von organischen Polymeren:

### Beispiel 1 (Bsp.1):

In einem 3-Liter-Dreihalskolben, ausgestattet mit einem Rückflusskühler und Ankerrührer, wurden 305,9 g deionisiertes Wasser, 0,15 g einer 20%-igen wässrigen Lösung eines Dialkylsulfosuccinats als anionischer Emulgator (AEROSOL MA^{®}), 0,02 g einer 40%-igen wässrigen Lösung eines Isotridecylethoxylats mit 15 EO-Einheiten als nichtionischer Emulgator (GENAPOL X-150^{®}) und 74 g der unten genannten Monomermischung "Dosierung 1" vorgelegt und unter Rühren (Drehzahl 150 U/min) unter Stickstoff auf 75°C aufgeheizt.

Bei dieser Temperatur wurde Initiatorlösung (0,94 g Kaliumperoxodisulfat in 20,4 g Wasser) in den Reaktor gegeben, wodurch die Polymerisation gestartet wurde. 30 Minuten nach dem Start der Polymerisation wurde aus separaten Behältern mit der Zudosierung von Monomeren (Dosierung 1), Emulgatoren (Dosierung 2) und Initiatorlösung (Dosierung 3) begonnen. Die Dosierzeiten bei Dosierung 1 und 2 lagen bei 4 Stunden und bei Dosierung 3 bei 4,5 Stunden.

Dosierung 1 (Monomermischung):
14,6 g Acrylsäure
14,6 g Hydroxyethylacrylat
1280,0 g Butylacrylat
87,4 g Ethylacrylat
58,3 g Methylmethacrylat
   0,3 g Dodecylmercaptan

Dosierung 2 (Emulgatormischung):
135,0 g Wasser
82,3 g Aerosol MA^{®} (20 %-ige Lösung)
10,5 g Genapol X-150^{®} (40 %-ige Lösung)

Dosierung 3 (Initiatorlösung):
102,0 g Wasser
3,9 g Kaliumperoxodisulfat

Nach Beendigung der Dosierungen wurde für 2 Stunden bei 75°C nachpolymerisiert. Nach Abkühlung auf Raumtemperatur wurde mit einer Ammoniaklösung auf pH 5 eingestellt.

Die so erhaltene Dispersion war nach mikroskopischen Untersuchungen stippenfrei. Der Feststoffgehalt der Dispersion, deren Brookfield-Viskosität (bei 25°C und 20 U/min) und die Polydispersität PD (Lichtstreuung LS 13320 der Firma BeckmanCoulter) der organischen Polymere sind in Tabelle 2 zusammengefasst.

### Beispiel 2 (Bsp.2):

Wie Beispiel 1, mit dem Unterschied, dass zusätzlich 0,1 Gew.T Vinyltriethoxysilan (GENIOSIL GF 56, Handelsname der Firma WA-CKER Chemie) eingesetzt wurde.

Die so erhaltene Dispersion war nach mikroskopischen Untersuchungen stippenfrei. Die Eigenschaften der organischen Polymere beziehungsweise der Dispersion sind in Tabelle 2 zusammengefasst.

**Tabelle 1: Monomerzusammensetzung der organischen Polymere:**

| | AS* [Gew. %] | HEA* [Gew.%] | BA* [Gew.%] | EA* [Gew.%] | MMA* [Gew.%] | GF 56* [Gew.%] |
|---|---|---|---|---|---|---|
| Bsp. 1 | 1,0 | 1,0 | 88,0 | 6,0 | 4,0 | |
| Bsp. 2 | 1,0 | 1,0 | 87,9 | 6,0 | 4,0 | 0,10 |
| VBsp.3 | 1,0 | 1,0 | 88,8 | 6,0 | 4,0 | |

| | | | | | | |
|---|---|---|---|---|---|---|
| *: AS: Acrylsäure; HEA: Hydroxyethylacrylat; BA: Butylacrylat; EA: Ethylacrylat; MMA: Methylmethacrylat; GF 56: Vinyltriethoxysilan. | | | | | | |

**Tabelle 2: Eigenschaften der organischen Polymere:**

| | Feststoffgehalt [%] | Brookfield-Viskosität [mPa.s] | Polydispersität PD |
|---|---|---|---|
| Bsp.1 | 70 | 628 | 6,2 |
| Bsp.2 | 65 | 960 | 127 |
| VBsp.3 | 50 | 5.790 | 1,5 |

### Beispiel 2 (Bsp.2):

Wie Beispiel 1, mit dem Unterschied, dass zusätzlich 0,1 Gew.T Vinyltriethoxysilan (GENIOSIL GF 56, Handelsname der Firma WA-CKER Chemie) eingesetzt wurde.

Die so erhaltene Dispersion war nach mikroskopischen Untersuchungen stippenfrei. Die Eigenschaften der organischen Polymere beziehungsweise der Dispersion sind in Tabelle 2 zusammengefasst.

Vergleichsbeispiel 3 (VBsp.3):
In einem 3-Liter-Dreihalskolben, ausgestattet mit einem Rückflusskühler und Ankerrührer, wurden 601 g deionisiertes Wasser, 1,8 g einer 20%-igen wässrigen Lösung eines Dialkylsulfosuccinats als anionischer Emulgator (AEROSOL MA^{®}), 0,24 g einer 40%-igen wässrigen Lösung eines Isotridecylethoxylats mit 15 EO-Einheiten als nichtionischer Emulgator (GENAPOL X-150^{®}) und 74 g der unten genannten Monomermischung "Dosierung 1" vorgelegt und unter Rühren unter Stickstoff (Drehzahl 150 U/min) auf 75°C aufgeheizt.

Bei dieser Temperatur wurde Initiatorlösung (1,8 g Kaliumperoxodisulfat in 40 g Wasser) in den Reaktor gegeben, wodurch die Polymerisation gestartet wurde. 30 Minuten nach dem Start der Polymerisation wurde aus separaten Behältern mit der Zudosierung von Monomeren (Dosierung 1), Emulgatoren (Dosierung 2) und Initiatorlösung (Dosierung 3) begonnen. Die Dosierzeiten bei Dosierung 1 und 2 lagen bei 4 Stunden und bei Dosierung 3 bei 4.5 Stunden.

Dosierung 1 (Monomermischung):
12,0 g Acrylsäure (AS)
12,0 g Hydroxyethylacrylat (HEA)
1054,8 g Butylacrylat (BA)
71,9 g Ethylacrylat (EA)
47,9 g Methylmethacrylat (MMA)
   0,3 g Dodecylmercaptan (DMC)

Dosierung 2 (Emulgatormischung):
200,4 g Wasser
161,7 g Aerosol MA^{®} (20 %-ige Lösung)
   20,6 g Genapol X-150^{®} (40 %-ige Lösung)

Dosierung 3 (Initiatorlösung):
200,4 g Wasser
7,7 g Kaliumperoxodisulfat

Nach Beendigung der Dosierungen wurde für 2 Stunden bei 75°C nachpolymerisiert. Nach Abkühlung auf Raumtemperatur wurde mit einer Ammoniaklösung auf pH 5 eingestellt.

Die so erhaltene Dispersion war nach mikroskopischen Untersuchungen praktisch stippenfrei. Die Eigenschaften der organischen Polymere beziehungsweise der Dispersion sind in Tabelle 2 zusammengefasst.

### Beispiel 4: Herstellung von modifiziertem Silica-Sol:

Unter Rühren bei 45°C wurden 32 g 3-Glycidoxypropyltriethoxysilan (GENIOSIL GF 80, Handelsname der Firma WACHER Chemie) zu 1000 g Silica-Sol (Bindzil 2040, Handelsname der Firma Akzonobel, Feststoffgehalt von 40%) und 48 g Wasser innerhalb 30 Minuten zudosiert.

Nach 6 h wurden die flüchtigen Komponenten und ein Teil des Wassers unter vermindertem Druck bei 60°C abdestilliert und die Dispersion auf Raumtemperatur abgekühlt und filtriert (Maschenweite 70 Mikrometer).

Die so erhaltene modifizierte Silica-Sol hatte einen Feststoffgehalt von 40% und war stabil, homogen und stippenfrei.

### Herstellung von Kompositpartikeln:

### Kompositpartikel K-1:

In einem Doppelmantelreaktor wurden bei 50°C unter Rühren 839 g der Dispersion aus Beispiel 1 und 161 g Silica-Sol aus Beispiel 4 vorgelegt und für 3 Stunden gerührt.

Es wurde eine stabile und homogene Kompositdispersion erhalten.

Der Feststoffgehalt, die Brookfield-Viskosität (bei 25°C und 20 U/min) der so erhaltenen Kompositdispersion sowie der Silica-Anteil der Kompositpartikel sind in Tabelle 3 zusammengefasst.

### Kompositpartikel K-2:

In einem Doppelmantelreaktor wurden bei 50°C unter Rühren 700 g Dispersion aus Beispiel 1 und 300 g Silica-Sol aus Beispiel 4 vorgelegt und für 3 Stunden gerührt.

Es wurde eine stabile und homogene Kompositdispersion erhalten.

Der Feststoffgehalt, die Brookfield-Viskosität sowie der Silica-Anteil der so erhaltenen Kompositdispersion sind in Tabelle 3 zusammengefasst.

### Kompositpartikel K-3:

In einem Doppelmantelreaktor wurden bei 50°C unter Rühren 847,5 g Dispersion aus Beispiel 2 und 152,5 g Silica-Sol aus Beispiel 4 vorgelegt und für 3 Stunden gerührt.

Es wurde eine stabile und homogene Kompositdispersion erhalten.

Der Feststoffgehalt, die Brookfield-Viskosität sowie der Silica-Anteil der so erhaltenen Kompositdispersion sind in Tabelle 3 zusammengefasst.

### Vergleichs-Kompositpartikel VK-4:

In einem Doppelmantelreaktor wurden bei 50°C unter Rühren 878,7 g Dispersion aus Beispiel 3 und 121,3 g Silica-Sol aus Beispiel 4 vorgelegt und für 3 Stunden gerührt.

Der Silica-Anteil lag bei 10 Gew.-% bezogen auf das Gesamttrockengewicht von organischem Copolymer und Silikat-Partikeln. Der Feststoffgehalt, die Brookfield-Viskosität sowie der Silica-Anteil der so erhaltenen Kompositdispersion sind in Tabelle 3 zusammengefasst.

**Tabelle 3: Eigenschaften und Austestungsergebnisse der Kompositpartikel:**

| Kompositpartikel | Silica [Gew.%]^{a)} | Feststoffgehalt [%] | Viskosität [mPa.s] | Lagerstabilität |
|---|---|---|---|---|
| K-1 | 10% | 65% | 152 | stabil |
| K-2 | 20% | 61% | 101 | stabil |
| K-3 | 10% | 61% | 550 | stabil |
| VK-4 | 10% | 48,8% | 4.870 | geliert |

| | | | | |
|---|---|---|---|---|
| a): Silicagehalt, bezogen auf Gesamtgewicht der Kompositpartikel; | | | | |

### Austestung der Lagerstabilität bei wässrigen Dispersionen der Kompositpartikel:

Die jeweilige Kompositdispersion wurden in geschlossenen Behältern vier Wochen bei 50°C gelagert.

Die Austestungsergebnisse sind in Tabelle 3 aufgeführt.

Die Vergleichs-Kompositpartikel VK-4 waren nach der Austestung vollständig geliert.

Dagegen wurde bei den erfindungsgemäßen Kompositpartikeln K1 bis K3 keine Gelierung und keine starke Zunahme der Viskosität festgestellt.

## Patentansprüche

1. Kompositpartikel auf Basis von feinteiligen anorganischen Feststoffen und organischen Polymeren, wobei organische Polymere basieren auf
a) einem oder mehreren ethylenisch ungesättigten Monomeren ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen und Olefine, Vinylaromaten und Vinylhalogenide, und
b) einem oder mehreren ethylenisch ungesättigten Carbonsäuren mit 3 bis 11 C-Atomen, **dadurch gekennzeichnet, dass** organische Polymere eine Polydispersität PD von ≥ 2 haben.

2. Kompositpartikel gemäß Anspruch 1, **dadurch gekennzeichnet, dass** es sich bei den feinteiligen anorganischen Feststoffen um Metalle oder Metallverbindungen, wie Metalloxide oder Metallsalze, oder um Halbmetalle oder Halbmetallverbindungen, wie Halbmetalloxide oder Halbmetallsalze, handelt.

3. Kompositpartikel gemäß Anspruch 1 oder 2, **dadurch gekennzeichnet, dass** es sich bei den feinteiligen anorganischen Feststoffen um Siliziumdioxid in Form von Wasserglas oder Silica-Solen handelt.

4. Kompositpartikel gemäß Anspruch 1 bis 3, **dadurch gekennzeichnet, dass** die Kompositpartikel zu 2 bis 45 Gew.-% auf feinteiligen anorganischen Feststoffen und/oder zu 55 bis 98 Gew.-% auf organischen Polymeren basieren, bezogen auf das Gesamtgewicht der Kompositpartikel.

5. Kompositpartikel gemäß Anspruch 1 bis 4, **dadurch gekennzeichnet, dass** die organischen Polymere zu 75 bis 99,5 Gew.-% auf Monomeren a) und/oder zu 0,1 bis 10 Gew.-% auf Monomeren b) basieren, bezogen auf das Gesamtgewicht der organischen Polymere.

6. Kompositpartikel gemäß Anspruch 1 bis 5, **dadurch gekennzeichnet, dass** es sich bei den organischen Polymeren um Polymerisate handelt von
Vinylestern mit 0,1 bis 5 Gew.-% an ethylenisch ungesättigten Carbonsäuren und ≤ 0,5 Gew.-% an ethylenisch ungesättigten Silanen, wobei gegebenenfalls 5 bis 45 Gew.-% an einem oder mehreren Monomeren ausgewählt aus der Gruppe umfassend Butylacrylat, Ethylen, Methacrylsäure- und Acrylsäurehydroxyalkylester einpolymerisiert sein können; oder
(Meth)acrylsäureestern mit 0,1 bis 5 Gew.-% an ethylenisch ungesättigten Carbonsäuren und ≤ 0,5 Gew.-% an ethylenisch ungesättigten Silanen, wobei gegebenenfalls 0,1 bis 50 Gew.-% an Styrol und gegebenenfalls ein oder mehrere Methacrylsäure- und/oder Acrylsäurehydroxyalkylester einpolymerisiert sein können;
wobei sich die Angaben in Gew.-% auf jeweils 100 Gew.-% aufaddieren.

7. Kompositpartikel gemäß Anspruch 1 bis 6, **dadurch gekennzeichnet, dass** die organischen Polymere erhältlich sind mittels radikalisch initiierter wässriger Emulsionspolymerisation von einem oder mehreren ethylenisch ungesättigten Monomeren a) und einem oder mehreren ethylenisch ungesättigten Monomeren b) in Gegenwart von einem oder mehreren Emulgatoren,
wobei ein Teil der insgesamt eingesetzten Menge an Emulgatoren vor dem Start der Polymerisation vorgelegt und der verbleibende Rest an Emulgatoren nach dem Start der Polymerisation zudosiert wird.

8. Kompositpartikel gemäß Anspruch 7, **dadurch gekennzeichnet, dass** vor dem Start der Emulsionspolymerisation 0,001 bis 5 Gew.-% Emulgator vorgelegt werden, bezogen auf das Gesamtgewicht der insgesamt in der Emulsionspolymerisation eingesetzten Emulgatoren.

9. Verfahren zur Herstellung von Kompositpartikeln gemäß Anspruch 1 bis 8, indem
ein oder mehrere feinteilige anorganische Feststoffe und ein oder mehrere organische Polymere
in einem Lösungsmittel oder einem Gemisch von mehreren Lösungsmitteln gemischt werden,
wobei feinteilige anorganische Feststoffe an organische Polymere fixiert werden und somit Kompositpartikel gebildet werden, und
wobei die organischen Polymere basieren auf
a) einem oder mehreren ethylenisch ungesättigten Monomeren ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen und Olefine, Vinylaromaten und Vinylhalogenide, und
b) einem oder mehreren ethylenisch ungesättigten Carbonsäuren mit 3 bis 11 C-Atomen, **dadurch gekennzeichnet, dass** organische Polymere in bimodaler oder in polymodaler Form vorliegen und eine Polydispersität PD von ≥ 2 haben.

10. Verwendung der Kompositpartikel gemäß Anspruch 1 bis 8 als Bindemittel, Cobindemittel oder Additiv für Pulverlacke, Beschichtungsmittel, Klebstoffe, hydraulisch abbindende Beschichtungsmassen oder für Formulierungen von Kunststoff- oder Kompositmaterialien.

11. Verwendung der Kompositpartikel gemäß Anspruch 1 bis 8 in Farben oder Klarlacken oder in Beschichtungs- oder Oberflächenbehandlungsmitteln für synthetische oder natürliche Materialien, wie Fasern, Textilien, Teppiche, Auslegware oder Papier.

## Claims

1. Composite particles based on finely divided inorganic solids and organic polymers, wherein the organic polymers are based on
a) one or more ethylenically unsaturated monomers selected from the group comprising vinyl esters of carboxylic acids having 1 to 15 carbon atoms, methacrylic esters or acrylic esters of carboxylic acids with unbranched or branched alcohols having 1 to 15 carbon atoms, and olefins, vinyl aromatics and vinyl halides, and
b) one or more ethylenically unsaturated carboxylic acids having 3 to 11 carbon atoms, **characterized in that**
the organic polymers have a polydispersity PD of ≥ 2.

2. Composite particles according to Claim 1, **characterized in that** the finely divided inorganic solids are metals or metal compounds, such as metal oxides or metal salts, or semimetals or semimetal compounds, such as semimetal oxides or semimetal salts.

3. Composite particles according to Claims 1 or 2, **characterized in that** the finely divided inorganic solids are silicon dioxide in the form of waterglass or silica sols.

4. Composite particles according to Claims 1 to 3, **characterized in that** the composite particles are based to an extent of 2 to 45% by weight on finely divided inorganic solids and/or to an extent of 55 to 98% by weight on organic polymers, based on the total weight of the composite particles.

5. Composite particles according to Claims 1 to 4, **characterized in that** the organic polymers are based to an extent of 75 to 99.5% by weight on monomers a) and/or to an extent of 0.1 to 10% by weight on monomers b), based on the total weight of the organic polymers.

6. Composite particles according to Claims 1 to 5, **characterized in that** the organic polymers are polymers of
vinyl esters with 0.1 to 5% by weight of ethylenically unsaturated carboxylic acids and ≤ 0.5% by weight of ethylenically unsaturated silanes, wherein optionally 5 to 45% by weight of one or more monomers selected from the group comprising butyl acrylate, ethylene, hydroxyalkyl methacrylates and acrylates can be copolymerized; or
(meth) acrylic esters with 0.1 to 5% by weight of ethylenically unsaturated carboxylic acids and ≤ 0.5% by weight of ethylenically unsaturated silanes, wherein optionally 0.1 to 50% by weight of styrene and optionally one or more hydroxyalkyl methacrylates and/or acrylates can be copolymerized;
wherein the figures in % by weight in each case add up to 100% by weight.

7. Composite particles according to Claims 1 to 6, **characterized in that** the organic polymers are obtainable by means of free-radically initiated aqueous emulsion polymerization of one or more ethylenically unsaturated monomers a) and one or more ethylenically unsaturated monomers b) in the presence of one or more emulsifiers,
wherein a part of the total amount of emulsifiers used is initially charged prior to the start of the polymerization and the remaining part of the emulsifiers is metered in after the start of the polymerization.

8. Composite particles according to Claim 7, **characterized in that** prior to the start of the emulsion polymerization, 0.001 to 5% by weight of emulsifier are initially charged, based on the total weight of the total emulsifiers used in the emulsion polymerization.

9. Process for producing composite particles according to Claims 1 to 8, by
mixing one or more finely divided inorganic solids and
one or more organic polymers
in a solvent or a mixture of two or more solvents, wherein finely divided inorganic solids are fixed to organic polymers and thus composite particles are formed, and
wherein the organic polymers are based on
a) one or more ethylenically unsaturated monomers selected from the group comprising vinyl esters of carboxylic acids having 1 to 15 carbon atoms, methacrylic esters or acrylic esters of carboxylic acids with unbranched or branched alcohols having 1 to 15 carbon atoms, and olefins, vinyl aromatics and vinyl halides, and
b) one or more ethylenically unsaturated carboxylic acids having 3 to 11 carbon atoms, **characterized in that**
the organic polymers are in bimodal or in polymodal form and have a polydispersity PD of ≥ 2.

10. Use of the composite particles according to Claims 1 to 8 as a binder, co-binder or additive for powder paints, coating compositions, adhesives, hydraulically setting coating compositions or for formulations of plastic or composite materials.

11. Use of the composite particles according to Claims 1 to 8 in paints or clearcoats or in coating or surface treatment compositions for synthetic or natural materials such as fibers, textiles, rugs, fitted carpets, or paper.

## Revendications

1. Particules composites à base de solides inorganiques finement divisés et de polymères organiques, les polymères organiques étant à base de
a) un ou plusieurs monomères éthyléniquement insaturés, choisis dans le groupe comprenant les esters vinyliques d'acides carboxyliques comprenant 1 à 15 atomes de carbone, les esters de l'acide méthacrylique ou de l'acide acrylique d'acides carboxyliques avec des alcools non ramifiés ou ramifiés comprenant 1 à 15 atomes de carbone et les oléfines, les aromatiques de vinyle et les halogénures de vinyle et
b) un ou plusieurs acides carboxyliques éthyléniquement insaturés comprenant 3 à 11 atomes de carbone, **caractérisées**
**en ce que** les polymères organiques présentent une polydispersité PD ≥ 2.

2. Particules composites selon la revendication 1, **caractérisées**
**en ce qu'**il s'agit, pour les solides inorganiques finement divisés, de métaux ou de composés métalliques, tels que les oxydes métalliques ou les sels métalliques, ou de semi-métaux ou de composés semi-métalliques, tels que les oxydes semi-métalliques ou les sels semi-métalliques.

3. Particules composites selon la revendication 1 ou 2, **caractérisées**
**en ce qu'**il s'agit, pour les solides inorganiques finement divisés, de dioxyde de silicium sous forme de verre soluble ou de sols de silice.

4. Particules composites selon la revendication 1 à 3, **caractérisées en ce que** les particules composites sont à base de solides inorganiques finement divisés à raison de 2 à 45% en poids et/ou de polymères organiques à raison de 55 à 98% en poids, par rapport au poids total des particules composites.

5. Particules composites selon la revendication 1 à 4, **caractérisées en ce que** les polymères organiques sont à base de monomères a) à raison de 75 à 99,5% en poids et/ou de monomères b) à raison de 0,1 à 10% en poids, par rapport au poids total de polymères organiques.

6. Particules composites selon la revendication 1 à 5, **caractérisées**
**en ce qu'**il s'agit, pour les polymères organiques, de polymères de
- esters de vinyle présentant 0,1 à 5% en poids d'acides carboxyliques éthyléniquement insaturés et ≤ 0,5% en poids de silanes éthyléniquement insaturés, le cas échéant 5 à 45% en poids d'un ou de plusieurs monomères choisis dans le groupe comprenant l'acrylate de butyle, l'éthylène, les esters hydroxyalkyliques de l'acide méthacrylique et de l'acide acrylique pouvant être copolymérisés ; ou
- esters de l'acide (méth)acrylique présentant 0,1 à 5% en poids d'acides carboxyliques éthyléniquement insaturés et ≤ 0,5% en poids de silanes éthyléniquement insaturés, le cas échéant 0,1 à 50% en poids de styrène et le cas échéant d'un ou de plusieurs esters hydroxyalkyliques de l'acide méthacrylique et/ou de l'acide acrylique pouvant être copolymérisés ;
la somme des indications en % en poids valant à chaque fois à 100% en poids.

7. Particules composites selon la revendication 1 à 6, **caractérisées en ce que** les polymères organiques peuvent être obtenus par polymérisation en émulsion aqueuse initiée par voie radicalaire d'un ou de plusieurs monomères a) éthyléniquement insaturés et d'un ou de plusieurs monomères b) éthyléniquement insaturés en présence d'un ou de plusieurs émulsifiants, une partie de la quantité totale utilisée d'émulsifiants étant disposée au préalable avant le début de la polymérisation et le reste des émulsifiants étant dosés après le début de la polymérisation.

8. Particules composites selon la revendication 7, **caractérisées en ce que** 0,001 à 5% en poids d'émulsifiants, par rapport au poids total de la totalité des émulsifiants utilisés dans la polymérisation en émulsion, sont disposés au préalable avant le début de la polymérisation en émulsion.

9. Procédé pour la préparation de particules composites selon la revendication 1 à 8, dans lequel
- un ou plusieurs solides inorganiques finement divisés et
- un ou plusieurs polymères organiques sont mélangés dans un solvant ou dans un mélange de plusieurs solvants,
les solides inorganiques finement divisés étant fixés aux polymères organiques et des particules composites étant ainsi formées et
les polymères organiques étant à base de
a) un ou plusieurs monomères éthyléniquement insaturés, choisis dans le groupe comprenant les esters vinyliques d'acides carboxyliques comprenant 1 à 15 atomes de carbone, les esters de l'acide méthacrylique ou de l'acide acrylique d'acides carboxyliques avec des alcools non ramifiés ou ramifiés comprenant 1 à 15 atomes de carbone et les oléfines, les aromatiques de vinyle et les halogénures de vinyle et
b) un ou plusieurs acides carboxyliques éthyléniquement insaturés comprenant 3 à 11 atomes de carbone, **caractérisé**
**en ce que** les polymères organiques se trouvent sous forme bimodale ou polymodale et présentent une polydispersité PD ≥ 2.

10. Utilisation des particules composites selon la revendication 1 à 8 comme liant, co-liant ou additif pour des laques en poudre, des agents de revêtement, des adhésifs, des masses de revêtement à prise hydraulique ou pour des formulations de matériaux synthétiques ou composites.

11. Utilisation des particules composites selon la revendication 1 à 8 dans des peintures ou des laques claires ou dans des agents de revêtement ou de traitement de surface pour des matériaux synthétiques ou naturels, tels que les fibres, les textiles, les tapis, les moquettes ou le papier.
